# EUROPEAN PATENT SPECIFICATION

(11) **EP 2 971 946 B1**
(45) Date of publication and mention of the grant of the patent: **17.02.2021**
(21) Application number: 14767925.2
(22) Date of filing: 13.03.2014
(51) Int. Cl.: F21V 5/04

(54) **LENS WITH CONTROLLED LIGHT REFRACTION**
LINSE MIT GESTEUERTER LICHTBRECHUNG
LENTILLE AYANT UNE RÉFRACTION DE LA LUMIÈRE COMMANDÉE

(30) Priority: 15.03.2013 US 201313843649; 14.01.2014 US 201414155061
(43) Date of publication of application: 20.01.2016
(73) Proprietor: Ideal Industries Lighting LLC, Sycamore, IL 60178 (US)
(72) Inventor: WILCOX, Kurt S., Libertyville, Illinois 60048 (US); RALEIGH, Craig, Racine, Wisconsin 53406 (US); GOLDSTEIN, Corey, Kenosha, Wisconsin 53140 (US)
(74) Representative: Caspary, Karsten
(86) International application number: PCT/US2014/026248
(87) International publication number: WO 2014/151688

(56) References cited:
- JP-A- 2012 185 949
- KR-A- 20110 064 930
- US-A1- 2003 235 050
- US-A1- 2004 246 606
- US-A1- 2008 198 604
- US-A1- 2010 271 708
- US-A1- 2010 302 786
- US-A1- 2011 103 051
- US-A1- 2011 157 891

## Description

### FIELD OF THE INVENTION

This invention relates to lighting fixtures and, more particularly, to optics designed for desired LED light distribution. This invention also relates to the field of LED optics.

### BACKGROUND OF THE INVENTION

In recent years, the use of light-emitting diodes (LEDs) for various common lighting purposes has increased, and this trend has accelerated as advances have been made in LEDs and in LED-array bearing devices, often referred to as "LED modules." Indeed, lighting needs which have primarily been served by fixtures using high-intensity discharge (HID) lamps, halogen lamps, compact florescent light (CFL) and other light sources are now increasingly beginning to be served by LEDs. Creative work continues in the field of LED development, and also in the field of effectively utilizing as much of the light emitted from LEDs as possible.

Some efforts have been made to develop small lenses for directing light emitted by small LED packages, and utilizing lenses intended to redirect some amount of emitted light to form a desired illumination pattern. However, such lenses have tended to fall short of the most highly desirable performance in that some of the LED-emitted light is often lost.

Typically, some of the LED-emitted light rays are oriented at angles that previously would result in illumination of undesirable areas and thus produce less than fully efficient illumination patterns. Prior lenses would typically be arranged to either prevent these undesirable light rays from exiting the lens or to block these rays immediately upon their exiting the lens. Even though these steps were deemed necessary to achieve desired illumination patterns and to prevent so-called lighting "trespass," they resulted in lost light and decreased efficiency of LED illuminators. It would be highly desirable to improve efficiency of output of light emitted by LEDs.

Typical LED illuminators emit light at a wide range of angles such that light rays reach the same area of the output surface of a lens at different angles. This has made it very difficult to control refraction of such light. As a result, only a portion of light being refracted is refracted in a desired direction, while the reminded exited the lens with very little control. It would be desirable to provide improved control of the direction of light exiting a lens.

Trespass lighting can be evaluated by more than just the amount of light emitted toward an undesirable direction; also to be considered is how far from the desired direction such light is directed. It would be highly beneficial to provide a lighting apparatus which produces a desired illumination pattern with a maximum amount of light emitted toward an area intended to be illuminated Pertinent prior art is disclosed in US 2010/302786 A1, WO 2012/132597 A1, US 2010/271708 A1, US 2011/103051 A1, US 2004/246606 A1, US 2003/235050 A1, US 2008/198604 A1 and KR 2011 0064930 A.

### OBJECTS OF THE INVENTION

It is an object of the invention to provide improved LED optics (lenses) to overcome some of the problems and shortcomings of the prior art, including those referred to above.

Another object of the invention is to provide an LED lens with improved light-output efficiency.

Another object of the invention is to provide an LED lens with improved control of the direction of light exiting the optic.

How these and other objects are accomplished will become apparent from the following descriptions and the drawings.

### SUMMARY OF THE INVENTION

The invention is defined in the appended claims.
This invention is a lens with improved efficiency of output of light from a light emitter which has an emitter axis and defines an emitter plane. It is preferred that the light emitter is an LED package which is free of a surrounding reflective surface. Such improved efficiency of light output from a light emitter is achieved with the inventive lens positioned over the emitter and specifically designed for controlled refraction of light at a lens output surface. The inventive lens provides useful output of almost all of the emitted light, including light emitted at angles which previously resulted in the loss of such light.

The inventive lens includes an emitter-adjacent base end forming an opening to an inner cavity surrounding the emitter. The convex inner region is formed along an open end of the inner cavity, wherein a cross-sectionally linear inner region joins a cross-sectionally convex inner region, extends therefrom toward the emitter axis and forms a cone-shaped inner surface portion at the closed end of the inner cavity.

The lens further has an outer surface which includes output regions each configured for refracting the light from a corresponding one of the inner regions such that at the outer surface light from each inner region is refracted substantially without overlapping light rays from the other inner regions.

In preferred embodiments, the outer surface output regions include an axis-adjacent first output region and a second output region spaced from the first region.

It is preferred that the outer surface further includes a base-adjacent outer-surface region which extends from the second output region and is substantially free from receiving any emitter light. The base-adjacent outer-surface region is preferably substantially orthogonal to the emitter plane.

The inner-cavity surface may be substantially rotationally symmetrical. The outer surface may also be substantially rotationally symmetrical such that the lens has a substantially annular cross-section made substantially parallel to the emitter plane.

Another aspect of this invention is an optical member having a plurality of lenses of the type described above. Each lens is for distribution of light from a corresponding one of spaced light emitters.

Each of the lenses has at least one layer of a polymeric material extending into the lens flange of such material and is spaced from the lens flanges that surround adjacent lenses. The optical member is a one-piece member which includes a polymeric carrier portion surrounding the lenses, overlapping with and molded onto the lens flanges across such overlapping, and extending laterally therefrom.

In some embodiments, the at least one lens layer is of a first polymeric material and the carrier is of a second polymeric material. In some of such embodiments, the first polymeric material is an acrylic and the second polymeric material is a polycarbonate.

In some other embodiments, the at least one lens layer and the carrier are of the same polymeric material.

Another aspect of this invention is an LED light fixture including a heat-sink structure having a mounting surface, a plurality of spaced LED light sources at the mounting surface, and a plurality of the lenses described above, each lens in alignment with a corresponding one of the light sources. In some embodiments, the LED light fixture includes the optical member as described above.

### BRIEF DESCRIPTION OF THE DRAWINGS

FIGURE 1 is an enlarged perspective cross-sectional view of a lens which does not form part of the invention.
FIGURE 2 is a greatly enlarged fragmentary cross-sectional side view of the lens of FIGURE 1 showing refraction of the emitter light by inner-cavity surface regions and a peripheral inner cavity surface.
FIGURE 3 is an enlarged fragmentary cross-sectional side view of the lens of FIGURE 1 showing refraction of light emitted by the emitter at about the emitter axis and including a primary lens.
FIGURE 4 is an enlarged fragmentary cross-sectional side view of the lens of FIGURE 1 showing refraction of light emitted at the emitter axis.
FIGURE 5 is an enlarged fragmentary cross-sectional side view showing non-refracted light direction of light emitted as in FIGURE 3.
FIGURE 6 is an enlarged fragmentary cross-sectional view of the lens of FIGURE 1 showing refraction of light emitted from one site of the emitter axis.
FIGURE 7 is an enlarged fragmentary cross-sectional view of the lens of FIGURE 1 showing refraction of light emitted from another side of the emitter axis.
FIGURE 8 is a perspective view of an LED light fixture having two optical members with a plurality of lenses.
FIGURE 9 is a perspective view of the optical member of the LED lighting fixture of FIGURE 8.
FIGURE 10 is an enlarged cross-sectional perspective view of one portion of the one-piece optical member of FIGURE 9, illustrating one of the lenses.
FIGURE 11 is a perspective view illustrating the plurality of the lenses.
FIGURE 12 is a perspective view of another optical member, shown from the light-output side.
FIGURE 13 is a perspective view of the optical member of FIGURE 12, but showing its light-input side.
FIGURE 14 is a plan view of the optical member of FIGURE 12.
FIGURE 15 is a side sectional view taken along section 15-15 as indicated in FIGURE 14.
FIGURE 16 is an end sectional view taken along section 16-16 as indicated in FIGURE 14.
FIGURE 17 is an enlarged perspective view of the lenses arranged as in the optical member of FIGURE 12 showing its light-input side.
FIGURE 18 is a side elevation of yet another lens, schematically shown with rays representing the direction of light by the lens surfaces seen in a front-to-back plane extending through the emitter axis.
FIGURE 19 is a side elevation of still another lens.
FIGURE 20 is another side elevation of the lens of FIGURE 19 schematically showing rays representing the direction of light by the lens surfaces seen in a side-to-side plane extending through the emitter axis.
FIGURE 21 is a side elevation of yet another lens.
FIGURE 22 and 22B are another side elevation of the lens of FIGURE 21 schematically showing rays representing the direction of light by the lens surfaces seen in a side-to-side plane extending through the emitter axis.
FIGURE 22A is a fragment of the side elevation of FIGURE 22 schematically showing rays representing the direction of axis-adjacent light by the lens surfaces.
FIGURE 23 is a side elevation of a lens according to the present invention.

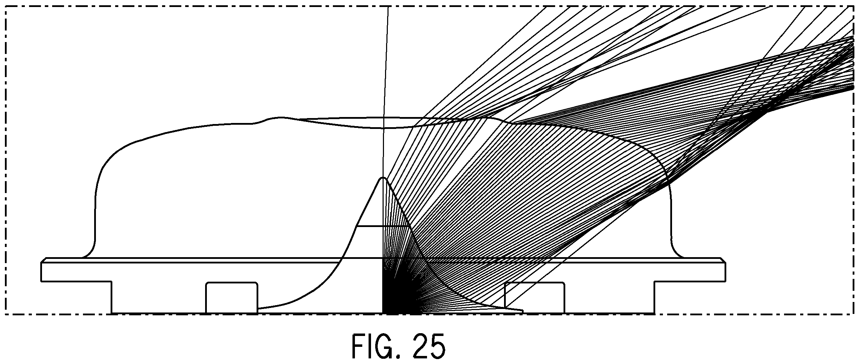

FIGURE 24 and 25 are another side elevation of the lens of FIGURE 23 schematically showing rays representing the direction of light by the lens surfaces seen in a side-to-side plane extending through the emitter axis.

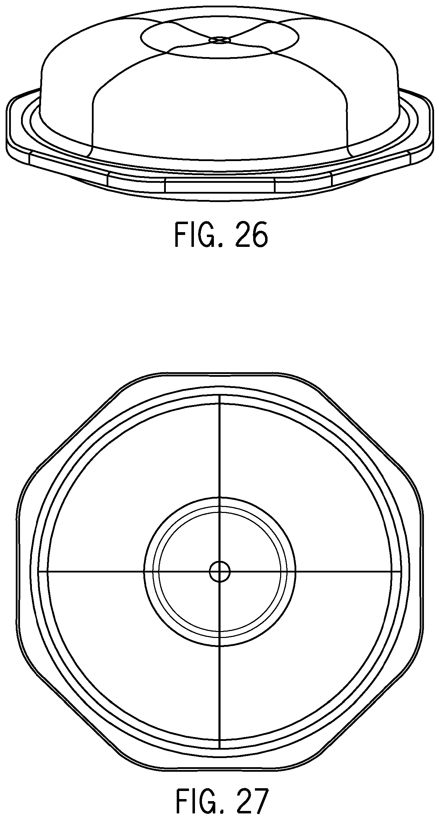

FIGURE 26 is a perspective view from light output side of the lens of FIGURE 23 illustrating an outer-surface feature receiving axial light from the inner surface and further directing such light away from the axis to facilitate diffusion of high-intensity axial light.
FIGURE 27 is a plan view of the lens of FIGURE 23 showing its light-output side.

### DETAILED DESCRIPTION OF PREFERRED EMBODIMENTS

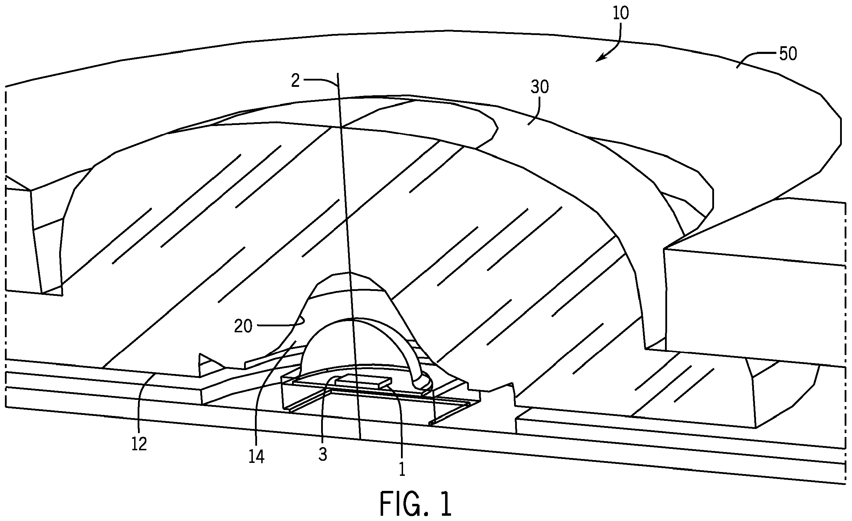

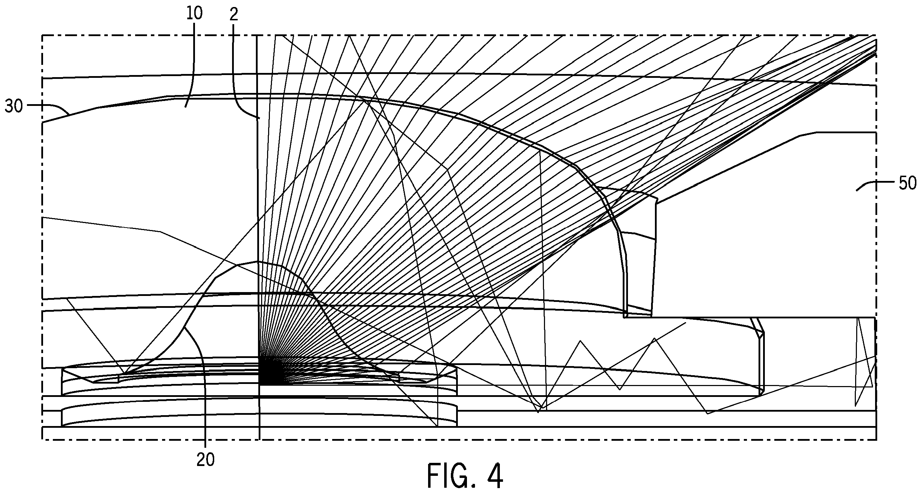

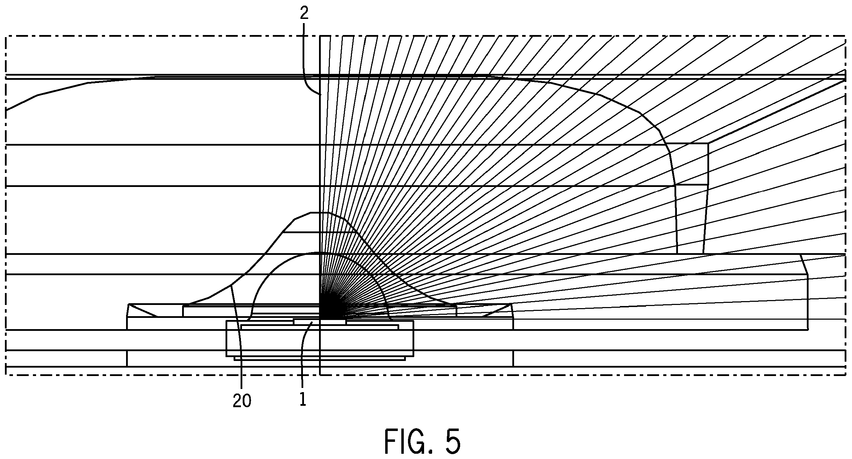

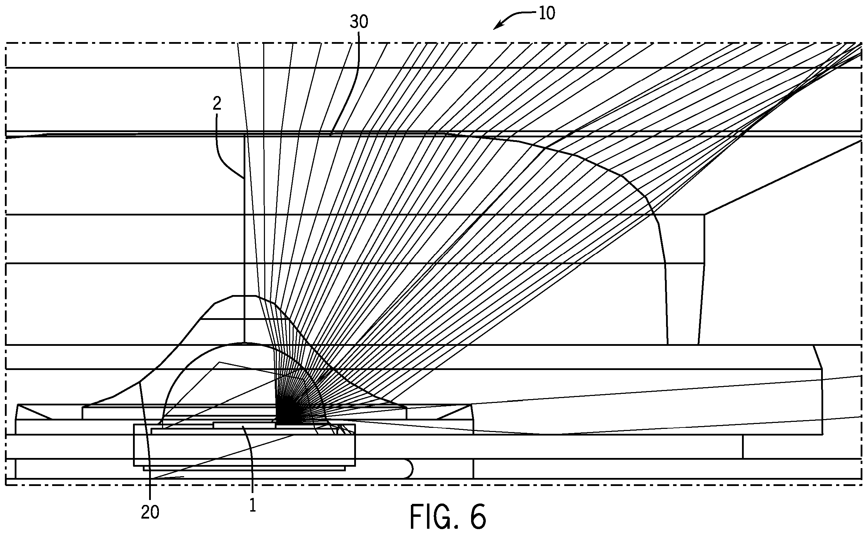

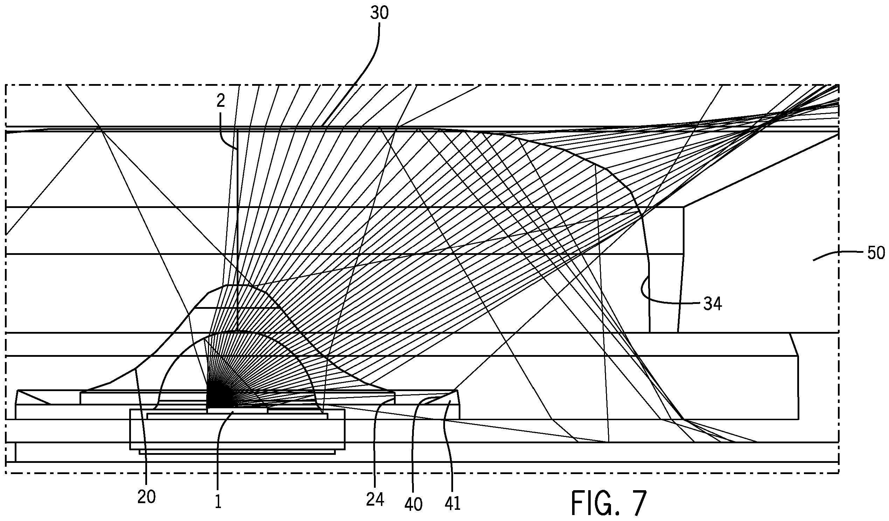

FIGURES 1-7 illustrate lens 10 which does not fall under the scope of the invention. Lens 10 is for directing light from a light emitter 1 which has an emitter axis 2 and defines an emitter plane 3. Lens 10 includes an emitter-adjacent base end 12 forming an opening to an inner cavity 14 surrounding emitter 1. Cavity 14 defines a space between emitter 1 and an inner-cavity surface 20 such that emitter light goes through air to enter lens material at inner-cavity surface 20. Because air and the lens material, which may be acrylic or other suitable material, have different refraction indexes resulting in bending of the light at inner-cavity surface 20.

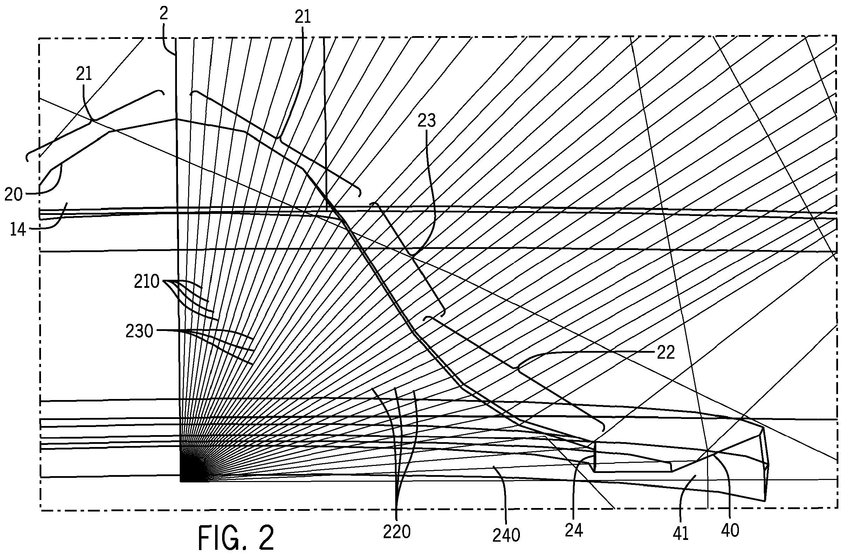

FIGURE 2 best shows configuration of inner-cavity surface 20 which includes an axis-adjacent first inner region 21, a second inner region 22 spaced from first inner region 21, and a middle inner region 23 which joins first and second regions 21 and 22 and is substantially asymptotical to first and second inner regions 21 and 22.

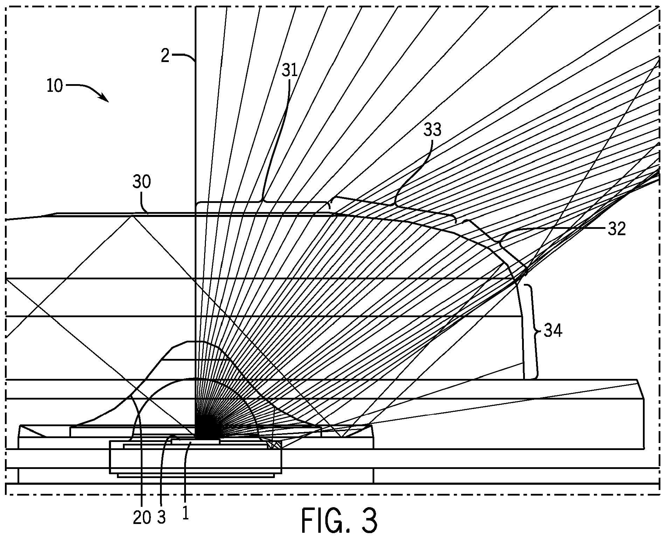

FIGURES 1 and 3 best show that lens 10 further has an outer surface 30 which includes an axis-adjacent first output region 31, a second output region 32 spaced from axis-adjacent first output region 31, and a middle output region 33 joining first and second output regions 31 and 32. Each of output regions 31, 32 and 33 is configured for refracting the light from a corresponding one of inner regions 21, 22 and 23. Therefore, at outer surface 30 light from each inner region 21, 22 or 23 is refracted substantially without overlapping light rays from the other inner regions.

As also seen in FIGURE 3, outer surface 30 further includes a base-adjacent outer-surface region 34 which extends from second output region 32 and is substantially free from receiving any emitter light. Base-adjacent outer-surface region 34 is substantially orthogonal to emitter plane 3. It should be appreciated that, since the base-adjacent outer-surface substantially does not participate in distribution of emitter light, it may have any configuration dictated by positioning and mounting of the lens or other factors such as material or space conservation.

FIGURE 2 best illustrates that axis-adjacent first inner region 21 is configured for refracting emitter light rays 210 which pass through axis-adjacent first inner region 21 away from axis 2. This provides a broader distribution of the light emitted about axis and allows to enlarge the size of first output region 31 to achieve better refraction of light 210 outside lens 10. Light 210 received by the axis-adjacent first inner region 21 has the highest intensity. This is because typically the highest illumination intensity of the emitter light is concentrated about axis 2. By refracting light 210 away from axis 2, axis-adjacent inner region 21 allows for dispersion of such light 210 over a larger area. This improves uniformity of illumination intensity and substantially decreases a so-called "hot-spot" effect in a plot of illumination intensity distribution. FIGURE 2 further illustrates that axis-adjacent first inner region 21 is substantially cross-sectionally concave.

As further seen in FIGURE 2, second inner region 22 is configured for refracting emitter light rays toward the axis. It is seen in FIGURE 2 that second inner region 22 is substantially cross-sectionally convex. Second inner region moves light 220, which mostly includes light emitted within about 30° from emitter plane 3, away from base-adjacent outer-surface region 34. As can be seen in FIGURE 1, base-adjacent outer-surface region 34 is surrounded by structures 50 which may serve to secure lens 10 with respect to emitter 1 or to be a shield blocking emitter light from going in an undesirable direction. As a result, any light that would arrive at the base-adjacent region 34 would be blocked by such structures 50 and would be eventually lost. In prior lenses, because some of the light was lost, to meet goals of desired polar candela plots, the outer surface had to be designed to bend some of the axis-adjacent light to the sides to provide required illumination. By refracting light 220 toward emitter axis 2, this light is received by outer surface 30 at output region 32 which not only transmits light 220 out of lens 10 but also further refracts light 220 in a desired direction, *i.e.*, away from emitter axis 2, as shown in FIGURE 3. Therefore, since light 220 provides desired illumination at the sides of desired illumination patterns, there is no need for bending axis adjacent light 210 for such purpose.

In prior lenses the space between the emitter and inner lens surface was filled with an optical gel such that the emitter light passed therethrough without refraction and arrived to the outer surface at the same angle as emitted. In such prior lenses, the outer surface was the only vehicle for light refraction. When compared to such prior lenses, the configuration of outer surface 30 of lens 10 is unexpectedly substantially simpler then of those prior lenses. In the prior lenses, light arrived at the outer surface at substantially broad range of angles. Thus, almost all these angles had to be taken into account in forming that prior outer surface for refraction of light in a desirable direction. In lens 10, the direction of the majority of emitter light is initially substantially controlled by inner surface 20 and light from one of inner regions is received substantially by only a corresponding one output region of outer surface 30. As a result, each one output region of outer surface 30 receives light which arrives at substantially narrow sector of angles. This, coupled with improved efficiency which eliminates the need for bending axis-adjacent light for side illumination, simplifies the configuration of that output region of outer surface 30 for refraction of such light in a desired direction and, therefore, decreases a probability of an irregularity impact on the light-output direction.

It can be seen in FIGURE 2 that middle inner region 23 is positioned with respect to emitter 1 to refract light away from axis 2 by progressively lesser amounts at positions progressively closer to the base-adjacent inner region. In some cases, middle region 23 may be configured and positioned to allow emitter light to pass therethrough with substantially no refraction. As best shown in FIGURE 2, middle inner region 23 is substantially cross-sectionally linear. In other words, middle inner region 23 is of substantially truncated conical shape.

As best seen in FIGURE 3, axis-adjacent first output region 31 is configured for receiving emitter light rays 210 from axis-adjacent first inner region 21 and further refracting them away from axis 2. Second output region 32 is configured for receiving emitter light rays 220 from second inner region 22 and refracting them substantially away from axis 22. Middle output region 33 is configured for receiving emitter light rays 230 from middle inner region 23 and refracting them substantially away from axis 2.

It should be understood that shown configuration of outer surface 30 is just an exemplary configuration. Outer surface 30 can have other configurations which would be dictated by an intended illumination pattern.

As further seen in FIGURES 1-7 second inner region 22 terminates before reaching emitter plane 3. Inner-cavity surface 20 further includes a base-adjacent inner region 24 extending from second inner region 22. Base-adjacent inner region 24 is substantially orthogonal to emitter plane 3 and is oriented for substantially non-refracted passing through of light 240 emitted between second inner region 22 and emitter plane 3.

Lens 10 further includes a peripheral inner surface 40 which receives light 240 from base-adjacent inner region 24. Peripheral inner surface 40 is configured for total internal reflection (TIR) of light 240 toward emitter axis 2. Thus, light 240 is retrieved from lens 10 for useful illumination rather than being lost. Peripheral inner surface 40 is formed by a peripheral cavity 41 extending from base end 12. As best seen in FIGURE 2, peripheral inner surface 41 is configured for TIR of light rays 240 before they enter peripheral cavity 41.

FIGURE 1 shows inner-cavity surface 20 substantially rotationally symmetrical. Peripheral cavity 41 and peripheral inner surface 40 are also substantially rotationally symmetrical. The embodiment illustrated in FIGURE 1 further shows outer surface 30 as substantially rotationally symmetrical such that lens 10 has a substantially annular cross-section in a plane substantially parallel to emitter plane 3. Alternatively, the inner and outer surfaces can have shapes that result in substantially oval or ovoid cross-section made in a plane substantially parallel to the emitter plane. In other words, these surfaces may have symmetries other than rotational. It should be further appreciated that, depending on the intended illumination pattern, the inventive lens may be shaped without a symmetry and have asymmetrical surfaces.

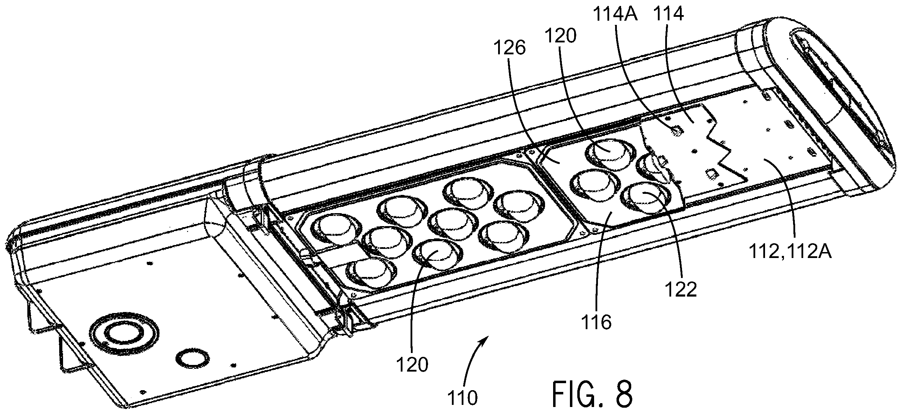

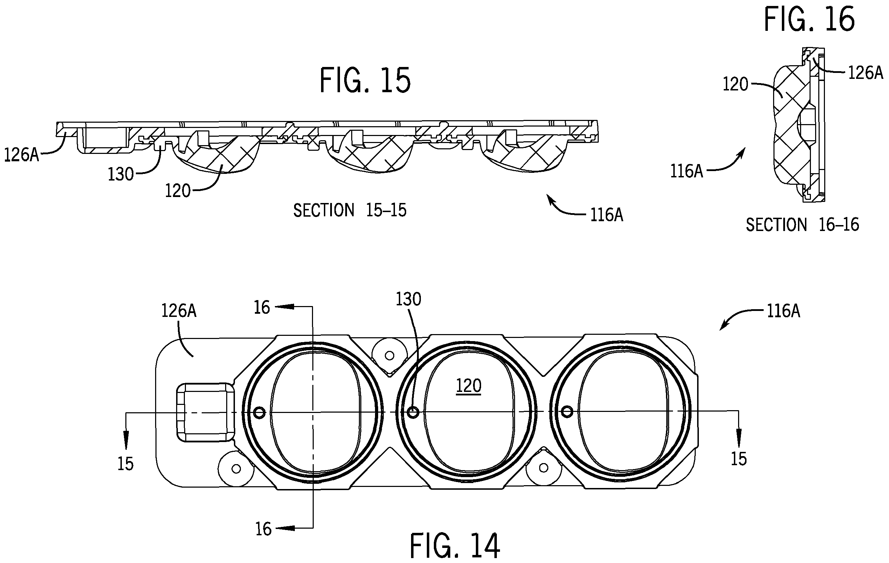

FIGURES 8-17 illustrate an LED lighting fixture 110. LED light fixture 110 includes a heat-sink structure 112 that has a mounting surface 112A on which a circuit board 114 is mounted. Circuit board 114 has a plurality of LED light sources 114A spaced thereon. A one-piece optical member 116 is positioned over circuit board 114 and has a plurality of secondary lenses 120 thereon, each in alignment with a corresponding one of light sources 114A.

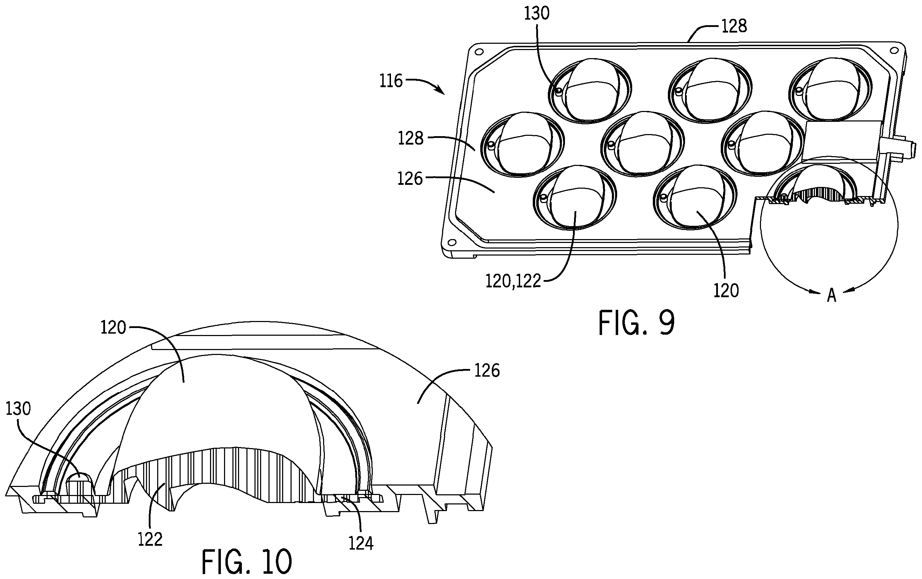

FIGURE 10 best illustrates that each of lenses 120 of one-piece optical member 116 has a layer 122 of polymeric material which extends into a lens flange 124 of such material and is spaced from lens flanges 124 that surround adjacent lenses 120. FIGURE 9 shows that one-piece optical member 116 also has a polymeric carrier portion 126 surrounding lenses 120. As also seen in FIGURE 10, carrier portion 126 overlaps with and is molded onto to lens flanges 124 across such overlapping, and carrier portion 126 extends laterally therefrom to a peripheral edge portion 128.

The polymeric material of lens 120, i.e., the material of layer 122 and flange 124, is an acrylic, while the polymeric material of carrier portion 126 is a polycarbonate. A wide variety of optical-grade acrylics can be used, and are available from various sources, including: Mitsubishi Rayon America, Inc.; Arkema Group; and Evonik Cyro LLC. Likewise, a wide variety of polycarbonate materials can be used, and are available from various sources, such as Bayer and Sabic.

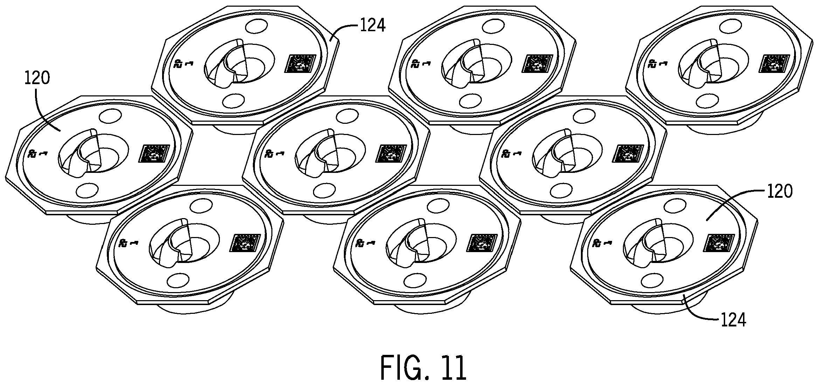

FIGURE 11 illustrates the positioning of secondary lenses 120 as placed in injection-molding apparatus (not shown). After such placement, carrier portion 126 is injection molded onto lens flanges 124 to form one-piece optical member 116. As already indicated, carrier portion 126 surrounds lenses 120 and overlaps and is molded onto to lens flanges 124.

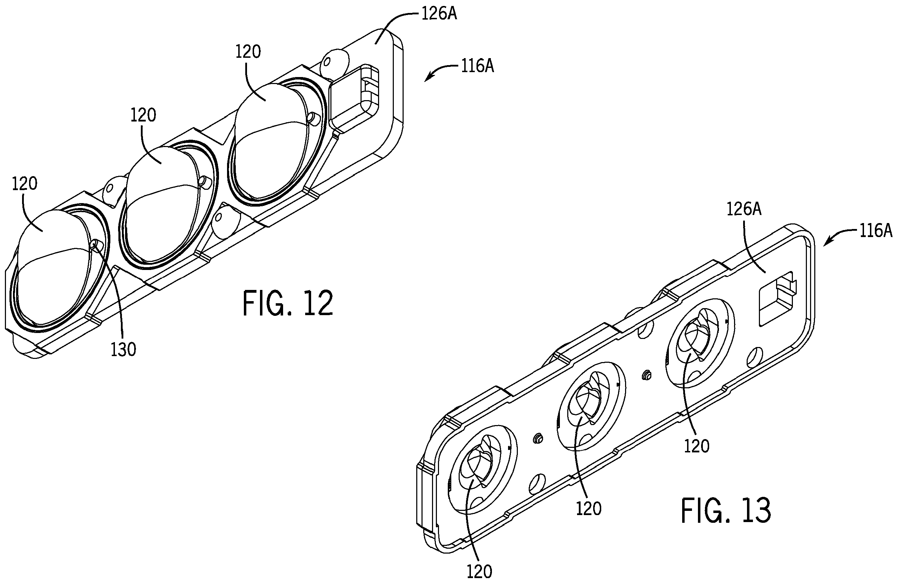

FIGURES 12-17 illustrate aspects of an alternative one-piece optical member 116A which has three lenses 120 and a carrier portion 126A. The only significant difference between one-piece optical members 116 and 116A is the number of lenses.

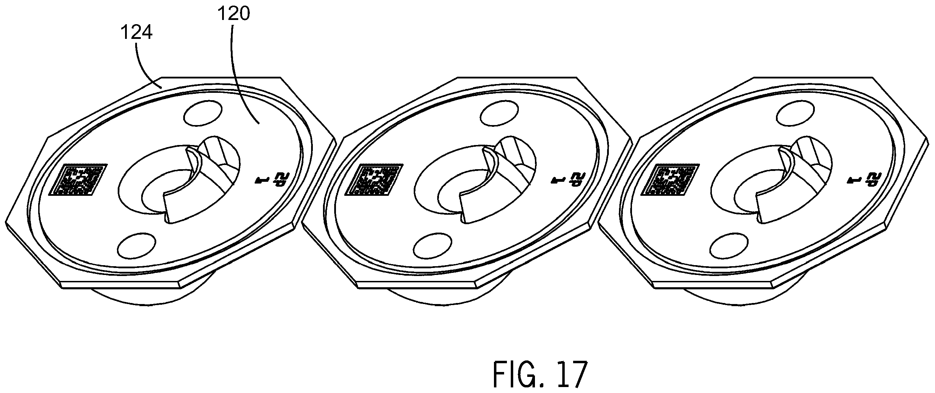

FIGURE 17, like FIGURE 11, illustrates the positioning of secondary lenses 120 as placed in injection-molding apparatus. Accurate placement into the injection-molding apparatus is facilitated by indexing features in the form of posts 130 (see FIGURES 12, 14 and 15) which extend from lens flange 124 and mate with corresponding recesses in the mold. (FIGURES 9 and 10 also show such indexing feature.)

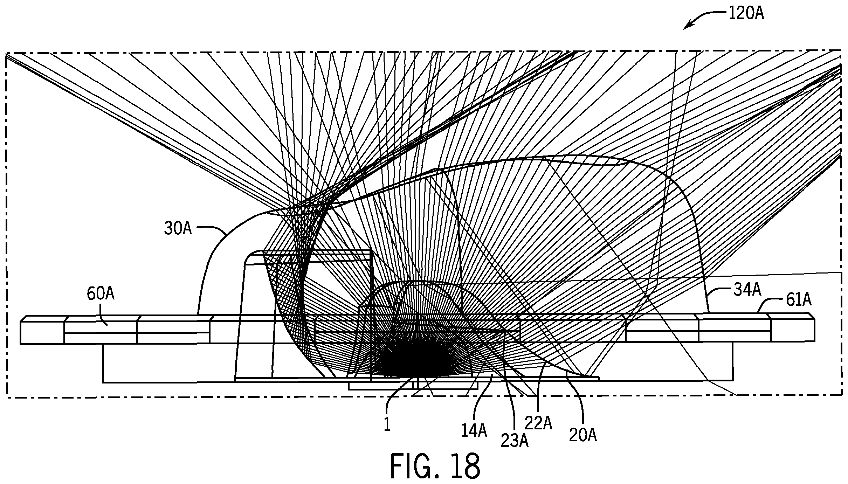

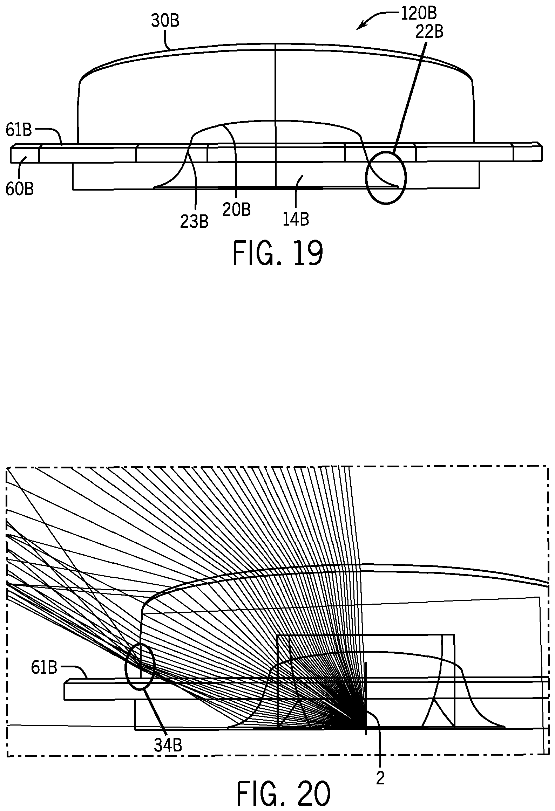

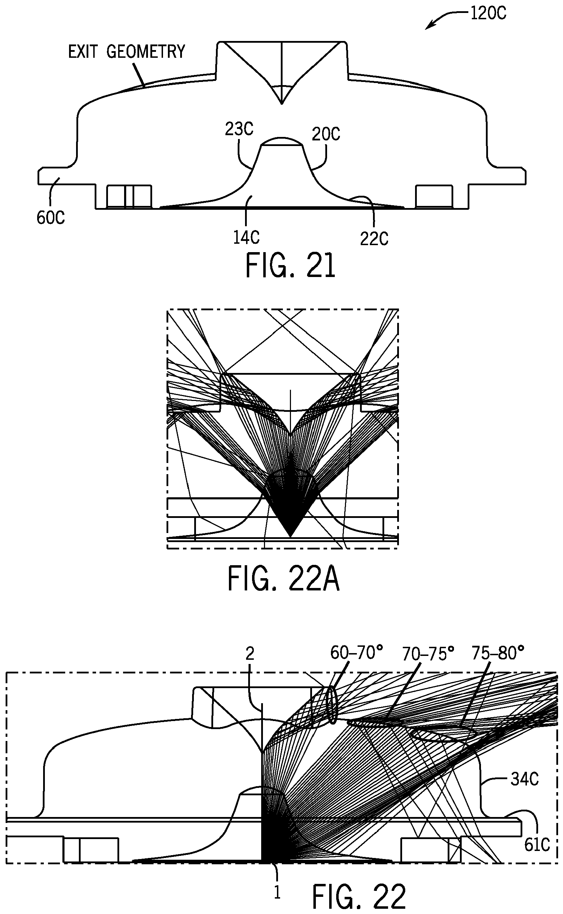

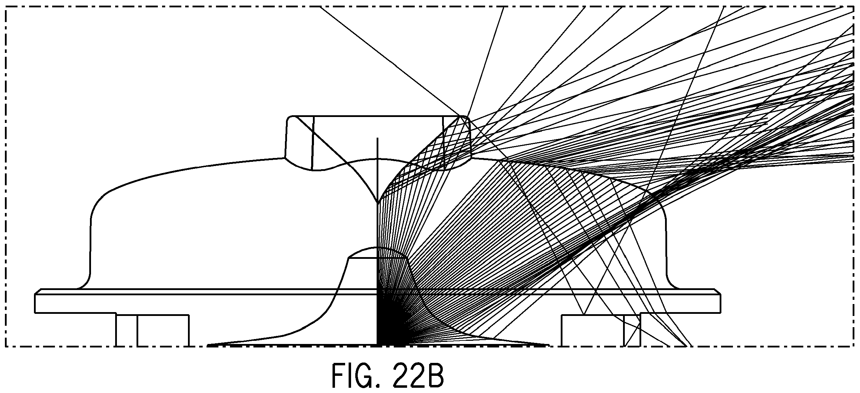

FIGURES 18-24 shows lenses 120A, 120B, 120C and 120D. Each of these lenses has inner surface 20A-D which defines inner cavity 14A-D and includes a substantially cross-sectionally convex inner region 22A-D along an open end of inner cavity 14A-D. As seen in each of FIGURES 18, 20 22 and 24, convex region 22A-D is configured for refracting emitter light rays toward emitter axis 2. FIGURES 18-24 also show a lens flange 60A-D surrounding lens 120A-D and having an outer flange surface 61A-D extending radially outwardly from lens outer surface 30A-D at positions axially spaced from light emitter 1. It is seen in FIGURES 18, 20, 22 and 24 that convex inner region 22A-D is configured to refract emitter light to the outer surface such that outer flange surface 61A-D is substantially free from receiving any emitter light.

FIGURES 18-24 also show that inner surface 20A-D has a substantially cross-sectionally linear inner region 23A-D which joins substantially cross-sectionally convex inner region 22A-D and extends therefrom toward emitter axis 1.

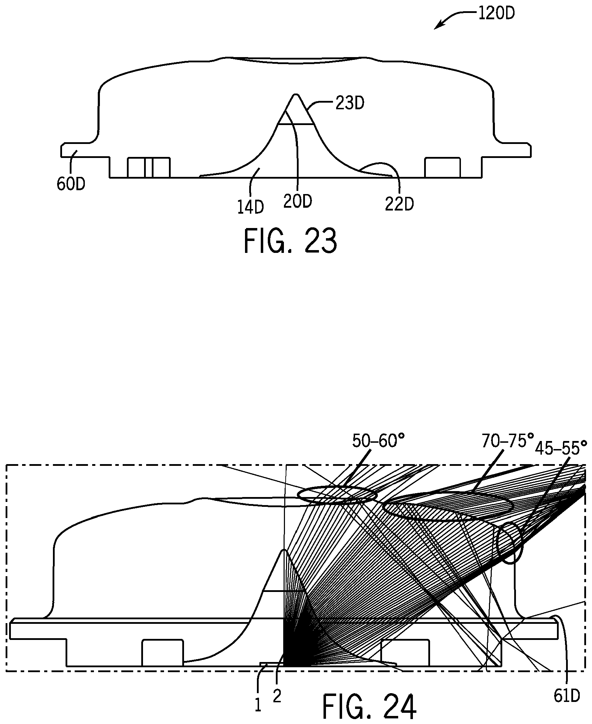

FIGURES 23 and 24 show exemplary embodiments of a lens according to the invention. FIGURES 23 and 24 show that, in lens 120D, substantially cross-sectionally linear inner region 23D forms a cone-shaped inner surface portion at the closed end of inner cavity 14D. It is further seen in FIGURE 24 that such cone-shaped inner surface portion serves to refract axis-adjacent emitter light away from the axis.

While the principles of the invention have been shown and described in connection with specific embodiments, it is to be understood that such embodiments are by way of example and are not limiting.

## Claims

1. Lens (120D) for distribution of light from a light emitter (1) having an emitter axis (2), the lens (120D) comprising:
an inner surface (20D) defining an inner cavity (14D) and including a cross-sectionally convex inner region (22D) configured for refracting emitter light rays toward the axis (2) and a cross-sectionally linear inner region (23D); and
an outer surface (30D) receiving the light from each of the inner regions (22D, 23D);
a lens flange (60D) surrounding the lens (120D) and extending radially outwardly from the lens outer surface (30D) at positions axially spaced from the light emitter (1);
**characterized in that**
the convex inner region (22D) is formed along an open end of the inner cavity (14D),
the cross-sectionally linear inner region (23D) joins the cross-sectionally convex inner region (22D), extends therefrom toward the emitter axis (2) and forms a cone-shaped inner surface portion at the closed end of the inner cavity (14D).

2. Lens (120D) of claim 1 wherein the cross-sectionally linear inner region (23D) is substantially cross-sectionally asymptotical to the cross-sectionally convex inner region (22D).

3. Lens (120D) of claim 1 wherein the outer surface (30D) has output regions (31, 32, 33) each configured for receiving and further directing the light from a corresponding one of the inner regions (22D, 23D) such that light from each inner region (22D, 23D) arrives at the outer surface (30D) without substantially overlapping light from the other inner regions (22D, 23D).

4. Lens (120D) of claim 3 wherein the outer surface output regions (31, 32, 33) include an axis-adjacent output region (31) configured for receiving axis-adjacent emitter light and refracting it away from the axis (2).

5. Lens (120D) of claim 1 wherein each lens flange (60D) has an outer flange surface (61D) extending radially outwardly from the lens outer surface (30D) at positions axially spaced from the light emitter (1), the convex inner region (22D) configured to refract emitter light to the outer surface (30D) such that the outer flange surface (61D) is substantially free from receiving any emitter light.

6. Lens (120D) of claim 1 wherein the outer surface (30D) includes an axis-adjacent output region (31) configured for receiving axis-adjacent emitter light (210) and refracting them away from the axis (2).

7. Lens (120D) of claim 1 or 6 comprising an emitter-adjacent base end surface (12) forming a light entrance opening to the inner cavity (14D), wherein the outer surface (30D) further includes an axis-adjacent first output region (31), a second output region (32) spaced from axis-adjacent first output region (31) and a base-adjacent outer-surface region (34) extending from the second output region (32) and being substantially free from receiving any emitter light.

8. Lens (120D) of claim 7 wherein the base-adjacent outer-surface region (34) is substantially orthogonal to the emitter-adjacent base end surface (12).

9. Lens (120D) of claim 1 wherein the inner-cavity surface (20D) is substantially rotationally symmetrical.

10. Lens (120D) of claim 9 wherein the inner-cavity surface (20D) is substantially rotationally symmetrical such that the lens (120D) has a substantially circular cross-section in a plane substantially parallel to an emitter-adjacent base end surface (12).

11. One-piece optical member (116, 116A) comprising
a plurality of lenses according to claim 1, wherein each lens (120D) of the plurality of lenses (120D) has at least one layer of polymeric material which extends into the lens flange (60D) of such material and is spaced from lens flanges (124) that surround adjacent lenses (120D), and
a polymeric carrier portion (126A) surrounding the lenses (120D), overlapping with and molded onto the lens flanges (60D) across such overlapping, and extending laterally therefrom.

12. Optical member (116, 116A) of claim 11 wherein the at least one lens layer is of a first polymeric material and the carrier (126A) is of a second polymeric material.

13. Optical member (116, 116A) of claim 12 wherein the first polymeric material is an acrylic and the second polymeric material is a polycarbonate.

14. Optical member (116, 116A) of claim 11 wherein the at least one lens layer and the carrier (126A) are of the same polymeric material.

15. LED light fixture (110) comprising:
a plurality of lenses (120D) according to any of the claims 1 to 10 or an optical member according to any of the claims 11 to 14;
a heat-sink structure (112) having a mounting surface (112A); and
a plurality of spaced LED light sources (114A) at the mounting surface (112A),
the plurality of lenses (120D) each being in alignment with a corresponding one of the light sources (114A).

## Patentansprüche

1. Linse (120D) zur Verteilung von Licht von einem Licht-Emitter (1) mit einer Emitter-Achse (2), wobei die Linse (120D) aufweist:
eine Innenfläche (20D), die einen Innenhohlraum (14D) definiert und die einen im Querschnitt konvexen inneren Bereich (22D), der dazu eingerichtet ist, Emitter-Lichtstrahlen in Richtung der Achse (2) zu brechen, und einen im Querschnitt linearen inneren Bereich (23D) aufweist; und
eine Außenfläche (30D), die Licht von jedem der inneren Bereiche (22D, 23D) erhält;
einen Linsenflanschabschnitt (60D), der die Linse (120D) umgibt und sich radial von der Linsen-Außenfläche (30D) an Positionen, die von dem Licht-Emitter (1) axial beabstandet sind, nach außen erstreckt;
**dadurch gekennzeichnet, dass**
der konvexe innere Bereich (22D) entlang eines offenen Endes des Innenhohlraums (14D) gebildet ist,
der im Querschnitt lineare innere Bereich (23D) sich an den im Querschnitt konvexen inneren Bereich (22D) anschließt, sich davon in Richtung zur Emitter-Achse (2) hin erstreckt und einen trichterförmigen Innenflächenabschnitt an dem geschlossenen Ende des Innenhohlraums (14D) bildet.

2. Linse (120D) nach Anspruch 1, wobei der im Querschnitt lineare innere Bereich (23D) im Wesentlichen im Querschnitt asymptotisch zu dem im Querschnitt konvexen inneren Bereich (22D) ist.

3. Linse (120D) nach Anspruch 1, wobei die Außenfläche (30D) Abgabebereiche (31, 32, 33) aufweist, die jeweils dazu eingerichtet sind, das Licht von einem jeweiligen der inneren Bereiche (22D, 23D) derart zu erhalten und weiter zu leiten, dass das Licht von jedem inneren Bereich (22D, 23D) an der Außenfläche (30D) ankommt, ohne dabei das Licht von den anderen inneren Bereichen (22D, 23D) im Wesentlichen zu überlagern.

4. Linse (120D) nach Anspruch 3, wobei die Außenflächen-Abgabebereiche (31, 32, 33) einen zur Achse benachbarten Abgabebereich (31) aufweisen, der dazu eingerichtet ist, um von zur Achse benachbartes Emitter-Licht zu erhalten und in Richtung weg von der Achse (2) zu brechen.

5. Linse (120D) nach Anspruch 1, wobei jeder Linsenflanschabschnitt (60D) eine äußere Flanschfläche (61D) aufweist, die sich von der Linsen-Außenfläche (30D) an Positionen, die von dem Licht-Emitter (1) axial beabstandet sind, radial nach außen erstreckt, wobei der konvexe innere Bereich (22D) dazu eingerichtet ist, Emitter-Licht zur Außenfläche (30D) derart zu brechen, dass die äußere Flanschfläche (61D) von dem Erhalten irgendeines Emitter-Lichts im Wesentlichen ausgenommen ist.

6. Linse (120D) nach Anspruch 1, wobei die Außenfläche (30D) einen zur Achse benachbarten Abgabebereich (31) aufweist, der dazu eingerichtet ist, um zur Achse benachbartes Emitter-Licht (210) zu erhalten und in Richtung weg von der Achse (2) zu brechen.

7. Linse (120D) nach Anspruch 1 oder 6, die eine zum Emitter benachbarte Basis-Endfläche (12) aufweist, die eine Lichteintrittsöffnung zum Innenhohlraum (14D) bildet, wobei die Außenfläche (30D) weiterhin einen zur Achse benachbarten ersten Abgabebereich (31), einen zweiten Abgabebereich (32), der von dem zur Achse benachbarten ersten Abgabebereich (31) beabstandet ist, und einen zur Basis benachbarten Außenflächenbereich (34) aufweist, der sich von dem äußersten Abgabebereich (32) erstreckt und der von dem Erhalten irgendeines Emitter-Lichts im Wesentlichen ausgenommen ist,.

8. Linse (120D) nach Anspruch 7, wobei der zu der Basis benachbarte Außenflächenbereich (34) im Wesentlichen senkrecht zu der zu dem Emitter benachbarten Basis-Endfläche (12) ist.

9. Linse (120D) nach Anspruch 1, wobei die Innenhohlraumfläche (20D) im Wesentlichen rotationssymmetrisch ist.

10. Linse (120D) nach Anspruch 9, wobei die Innenhohlraumfläche (20D) im Wesentlichen derart rotationssymmetrisch ist, dass die Linse (120D) einen im Wesentlichen kreisförmigen Querschnitt in einer Ebene im Wesentlichen parallel zu einer zum Emitter benachbarten Basis-Endfläche (12) hat.

11. Einstückiges optisches Element (116, 116A) mit:
einer Mehrzahl von Linsen nach Anspruch 1, wobei jede Linse (120D) der Mehrzahl von Linsen (120D) mindestens eine Schicht aus Polymermaterial aufweist, die sich in dem Linsenflanschabschnitt (60D) aus derartigem Material erstreckt und die von Linsenflanschabschnitten (124), die benachbarte Linsen (120D) umgeben, beabstandet ist, und
einem Polymer-Trägerabschnitt (126A), der die Linsen (120D) umgibt, der die Linsenflanschabschnitte (60D) überlappt und an diesen über einer solchen Überlappung angegossen ist, und sich davon seitlich erstreckt.

12. Optisches Element (116, 116A) nach Anspruch 11, wobei die mindestens eine Linsenschicht aus einem ersten Polymermaterial und der Träger (126A) aus einem zweiten Polymermaterial gebildet ist.

13. Optisches Element (116, 116A) nach Anspruch 12, wobei das erste Polymermaterial ein Acryl ist und das zweite Polymermaterial ein Polycarbonat ist.

14. Optisches Element (116, 116A) nach Anspruch 11, wobei die mindestens eine Linsenschicht und der Träger (126A) aus demselben Polymermaterial gebildet sind.

15. LED-Leuchtvorrichtung (110) mit
einer Mehrzahl von Linsen (120D) nach einem der Ansprüche 1 bis 10 oder einem optischen Element nach einem der Ansprüche 11 bis 14;
einer Kühlkörperstruktur (112) mit einer Befestigungsfläche (112A); und
einer Mehrzahl von beabstandeten LED-Lichtquellen (114A) an der Befestigungsfläche (112A),
wobei die Mehrzahl von Linsen (120D) jeweils mit einer entsprechenden der Lichtquellen (114A) ausgerichtet ist.

## Revendications

1. Lentille (120D) pour la distribution de lumière provenant d'un émetteur de lumière (1) ayant un axe (2) d'émetteur, la lentille (120D) comprenant :
une surface interne (20D) définissant une cavité interne (14D) et comportant une région interne (22D) convexe en section transversale configurée pour réfracter des rayons lumineux d'émetteur vers l'axe (2) et une région interne (23D) linéaire en section transversale et
une surface externe (30D) recevant la lumière provenant de chacune des régions internes (22D, 23D),
une bride de lentille (60D) entourant la lentille (120D) et s'étendant radialement vers l'extérieur depuis la surface externe (30D) de lentille à des positions axialement espacées de l'émetteur de lumière (1),
**caractérisée en ce que**
la région interne (22D) convexe est formée le long d'une extrémité ouverte de la cavité interne (14D),
**en ce que** la région interne (23D) linéaire en section transversale rejoint la région interne (22D) convexe en section transversale, s'étend de celle-ci vers l'axe (2) d'émetteur et forme une partie de surface interne conique à l'extrémité fermée de la cavité interne (14D).

2. Lentille (120D) de la revendication 1 dans laquelle la région interne (23D) linéaire en section transversale est sensiblement asymptotique en section transversale par rapport à la région interne (22D) convexe en section transversale.

3. Lentille (120D) de la revendication 1 dans laquelle la surface externe (30D) a des régions de sortie (31, 32, 33) configurées chacune pour recevoir et diriger en outre la lumière provenant d'une région interne correspondante des régions internes (22D, 23D), de sorte que de la lumière provenant de chaque région interne (22D, 23D) arrive à la surface externe (30D) sans chevaucher sensiblement de la lumière provenant des autres régions internes (22D, 23D).

4. Lentille (120D) de la revendication 3 dans laquelle les régions de sortie (31, 32, 33) de surface externe comportent une région de sortie (31) adjacente à l'axe, configurée pour recevoir de la lumière d'émetteur adjacente à l'axe et en réfracter en s'éloignant de l'axe (2) .

5. Lentille (120D) de la revendication 1 dans laquelle chaque bride de lentille (60D) a une surface de bride externe (61D) s'étendant radialement vers l'extérieur depuis la surface externe (30D) de lentille à des positions axialement espacées de l'émetteur de lumière (1), la région interne (22D) étant configurée pour réfracter de la lumière d'émetteur vers la surface externe (30D) de sorte que la surface de bride externe (61D) soit sensiblement exempte de recevoir toute lumière d'émetteur.

6. Lentille (120D) de la revendication 1 dans laquelle la surface externe (30D) comporte une région de sortie (31) adjacente à l'axe configurée pour recevoir de la lumière d'émetteur (210) adjacente à l'axe et en réfracter en s'éloignant de l'axe (2).

7. Lentille (120D) de la revendication 1 ou 6 comprenant une surface d'extrémité de base (12) adjacente à l'émetteur formant une ouverture d'entrée de lumière vers la cavité interne (14D), dans laquelle la surface externe (30D) comporte en outre une première région de sortie (31) adjacente à l'axe, une deuxième région de sortie (32) espacée de la première région de sortie (31) adjacente à l'axe et une région de surface externe (34) adjacente à la base s'étendant de la deuxième région de sortie (32) et étant sensiblement exempte de recevoir toute lumière d'émetteur.

8. Lentille (120D) de la revendication 7 dans laquelle la région de surface externe (34) adjacente à la base est sensiblement orthogonale à la surface d'extrémité de base (12) adjacente à l'émetteur.

9. Lentille (120D) de la revendication 1 dans laquelle la surface de cavité interne (20D) est sensiblement à symétrie de rotation.

10. Lentille (120D) de la revendication 9 dans laquelle la surface de cavité interne (20D) est sensiblement à symétrie de rotation, de sorte que la lentille (120D) ait une section transversale sensiblement circulaire dans un plan sensiblement parallèle à une surface d'extrémité de base (12) adjacente à l'émetteur.

11. Organe optique (116, 116A) monobloc comprenant une pluralité de lentilles selon la revendication 1, dans lequel chaque lentille (120D) de la pluralité de lentilles (120D) a au moins une couche de matériau polymère qui s'étend dans la bride de lentille (60D) d'un tel matériau et est espacée de brides de lentille (124) qui entourent des lentilles (120D) adjacentes, et
une partie de support polymère (126A) entourant les lentilles (120D), se chevauchant avec les brides de lentilles (60D) et moulée sur celles-ci à travers un tel chevauchement et s'étendant latéralement à partir de celles-ci.

12. Organe optique (116, 116A) de la revendication 11 dans lequel l'au moins une couche de lentille est en un premier matériau polymère, et le support (126A) est en un deuxième matériau polymère.

13. Organe optique (116, 116A) de la revendication 12 dans lequel le premier matériau polymère est un acrylique et le deuxième matériau polymère est un polycarbonate.

14. Organe optique (116, 116A) de la revendication 11 dans lequel l'au moins une couche de lentille et le support (126A) sont faits du même matériau polymère.

15. Luminaire à LED (110) comprenant :
une pluralité de lentilles (120D) selon l'une des revendications 1 à 10 ou un organe optique selon l'une des revendications 11 à 14,
une structure de dissipateur thermique (112) ayant une surface de montage (112A) et
une pluralité de sources lumineuses (114A) à LED espacées sur la surface de montage (112A),
la pluralité de lentilles (120D) étant chacune en alignement avec une source lumineuse correspondante des sources lumineuses (114A).
